# EUROPEAN PATENT SPECIFICATION

(11) **EP 0 461 140 B1**
(45) Date of publication and mention of the grant of the patent: **31.08.1994**
(21) Application number: 90903614.7
(22) Date of filing: 01.03.1990
(51) Int. Cl.: F16L 55/165

(54) **IMPROVEMENTS RELATING TO THE LINING OF PIPELINES OR PASSAGEWAYS**
AUSKLEIDUNG VON PIPELINES UND KANÄLEN
AMELIORATIONS RELATIVES AU GARNISSAGE DE PIPELINES OU DE CONDUITS

(30) Priority: 02.03.1989 GB 8904824; 03.03.1989 GB 8904969
(43) Date of publication of application: 18.12.1991
(73) Proprietor: INA Acquisition Corporation, Memphis, TN 38138 (US)
(72) Inventor: WOOD, Eric, Isle of Man (GB)
(74) Representative: Denmark, James
(86) International application number: GB9000322
(87) International publication number: WO9010173

(56) References cited:
- EP-A- 0 146 331
- EP-A- 0 260 341
- GB-A- 2 133 438
- GB-A- 2 206 173
- US-A- 3 422 631
- US-A- 3 738 565
- US-A- 4 064 211
- US-A- 4 385 885
- US-A- 4 581 247
- US-A- 4 758 115
- US-A- 4 865 673

## Description

This invention relates to the treating of underground sewer pipes wherein the known technique of everting a flexible lining tube into the pipeline or passageway is adopted. This technique however is used in combination with a technique for the increasing of the sewer pipe diameter for the creation of a sewer pipe with improved environmental effect.

With existing underground sewer pipes, many of which have been in use for a large number of years, they have shown themselves to be of insufficient capacity to handle certain conditions. For example, a sewer pipe may be of insufficient capacity to handle flood conditions, and such problem according to the invention is capable of solution in a simple and effective manner by a relatively small increase in the pipeline or passageway diameter.

It so happens that in the United Kingdom, public authority funds allocated to the sewerage systems in the country are largely allocated to projects which have as their object to relieve flooding conditions, and a relatively small proportion is in fact allocated to repair and renovation of existing sewers, although the need for effecting repair and renovation is in fact acute.

A known process set forth in U.S. Patent No. 4064,211 for effecting renovation and repair of existing sewers has shown itself to be extremely effective and successful, and it involves everting a flexible lining material into and along a sewer pipe. The lining material is absorbent felt and is impregnated with a curable synthetic resin. When the lining has been everted into position it is held by a fluid pressure against the sewer inner surface, until the resin cures, when the lining becomes a free-standing pipe lining the sewer surface. Furthermore, it is known from US-A-4758115 to evert a liner having a woven sleeve impregnated with resin behind a working member forming a hole for a new pipeline. In US-A-3422631 a liner is everted immediately behind a driving head forming a hole for a new pipe.

It is also known to increase the size of underground sewer pipes using mould tools, drills, or plough devices for example as set forth in U.S. Patent No 4738565 and European Patent Application No 0146331, and to pull into such enlarged pipes suitable pipes or pipe linings immediately behind the expander. However, the technique involves creating a passageway which is larger in diameter than the pipe to be inserted. Difficulties, due to friction, are encountered due to the fact that the pipe is pulled into position in the passageway, and in any event when the pipe is installed there will be a clearance between the pipe and the created passageway which may have to be filled with grouting material or the like.

The present invention has as its object to provide a means whereby in a simple and effective manner, sewer pipes can be environmentally enhanced by adapting and combining existing techniques.

According to the invention there is provided a method of increasing the diameter of an underground sewer pipe to render it more suitable to accomodate flood conditions as defined by claim 1.

Where an existing pipe is burst by a hydraulic expander or impact expander, the advantage of following the expanding means is that broken pieces of pipe which result from the expanding operation, are held in position by the everted tube and the lining operation can take place readily so that the broken pieces of pipe will not be able to fall into the base of the enlarged passageway. A new enlarged pipe will be immediately formed rendering the sewer capable of carrying more water, without additional work being required. Flood conditions can therefore be better accomodated.

Instead of expanding the pipeline or passageway diameter by the utilisation of an expanding tool, an excavating type tool may be used which serves to break or cut the existing pipe, and in such case there is preferably also means for removing the resulting debris ahead of the cutting or excavating tool. Immediately behind the tool follows a lining operation whereby a flexible lining tube is everted onto the new pipeline or passageway surface. The lining tube is a resin impregnated Insituform type tube which is held in position until the resin cures, completing the lining operation.

Where the cut debris is removed ahead of the cutting or excavating tool this may be effected by pumping a viscous high specific gravity fluid or material into the pipe in order to force the debris out of the pipe by a floatation method.

The cutting or excavatng tool or hydraulic or impacted expander may be pulled through the sewer pipe by means of a winch and appropriate rope or cable.

Embodiments of the invention will now be described by way of example, with reference to the accompanying diagramatic drawings, wherein;-
Fig 1 shows a cross-sectional view of a sewer pipe which is being enlarged and re-lined;
Fig 2 is a view similar to Fig. 1, but showing an alternative arrangement;
Fig 3 shows the cutting apparatus of Fig. 1 in perspective elevation;
Fig 4 is a perspective view showing another method of enlarging and lining a pipeline or passageway.
Fig 5 is a sectional elevation of the arrangemetn shown in Fig 4;
Fig 6 is a perspective view also showing the arrangement of Fig 4, but in addition indicating the ground level equipment used in the method;

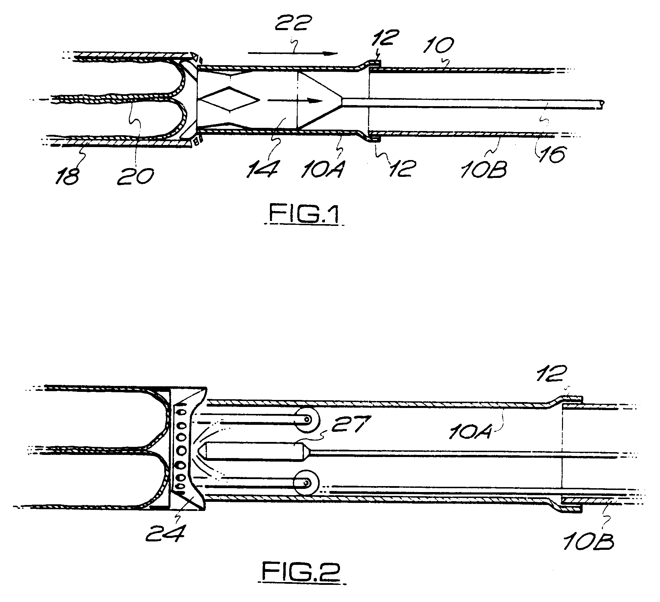

Referring now to the drawings in detail, in Fig 1 an underground sewer pipe (10) is formed by a plurality of pipe lengths (10A) (10B) (Fig 2) etc. each of which has a bell mouth (12) so that the pipe lengths can interfit at joints as shown. It is assumed that the pipeline (10) requires to be expanded, and to effect this an expanding tool (14) is pulled along the inside of the pipeline by a suitable cord (16) cable or the like. The cord or cable (16) also provides a hydraulic connection or an air connection to the expander (14), and the expander (14) either operates on the principle of being expanded bydraulically or it may embody air hammers which are operated by compressed air. In any event the expander (14) has the effect of increasing the size of the pipeline (10) to the extent indicated by reference (18), and in this embodiment of the invention the portions of the broken pipe length are held in position in that immediately following the expander (14) along the pipeline or passageway is an everting flexible tubular member (20) which comprises an absorbent felt impregnated with cuvable synthetic resin. This everting tube is inserted by fluid pressure which may be gaseous or liquid. The entire assembly moves along the pipeline (10) in the direction of the arrow (22).

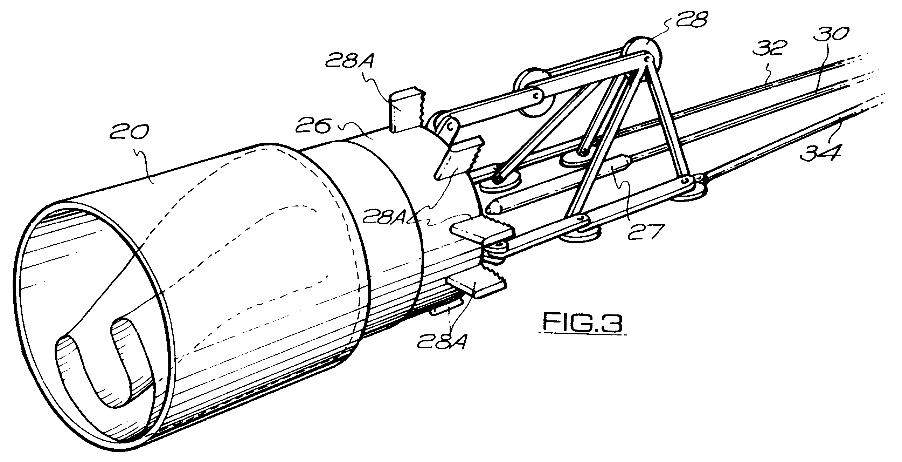

In the arrangement of Fig 2, instead of the expander (14) being used, a driven cutting head (24) is used, and the cutting head as shown in Fig 3 comprises a rotary drum (26) provided with cutting blades (28A) which cut the pipe lengths (10A) (10B) in order to expand the pipeline or passageway diameter. The resulting debris is in this example allowed to fall into the pipeline or passageway and is displaced by the use of a jet cleaner (27) which is attached to the cutting assembly which is indicated in perspective elevation in Fig 3. The cutting assembly has rollers or wheels (28) to enable it to be supported by and to roll on the pipe lengths (10A) (10B).

The jet cleaner (27) is supplied by feeding water through pipe (30), and oil go and return pipes (32) and (34) are supplied to a hydraulic motor in the drum (26) for the driving of same to rotate the cutter blades (28) about the axis of the pipe (10). When the drum rotates in a cutting direction the blades (28) move outwardly to perform the cutting, but when the drum rotation is reversed the blades retract to enable the drum to be removed from the pipe (10).

Following behind the cutting head (24) is a lining tube (20) which is everted into position lining using fluid pressure in the new enlarged passageway.

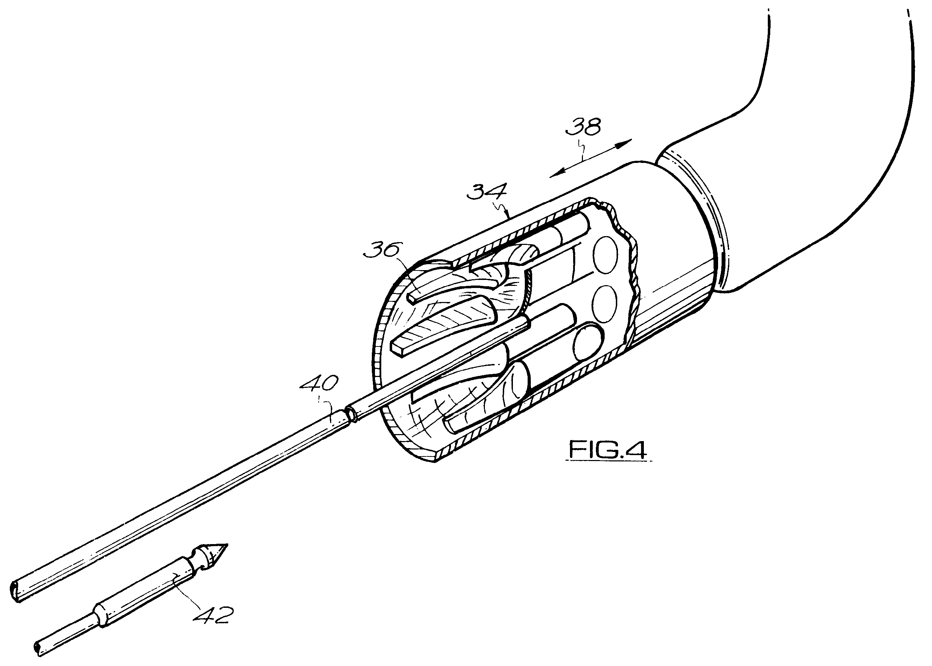

In the arrangement of Fig 4 an enlarging head (34) has a plurality of reciprocal hammers (36) which are driven back and forward in the direction of the arrow (38) in order to punch and break the old pipe sections (10A) and (10B) from the pipeline in order to increase the pipeline diameter. The hammers (36) are driven by pressure air through a high pressure air line (40) which also forms the means for pulling the head (34) along the pipeline or passageway. A jetting head (42) similar to the head (26) serves for the cleaning of the pipe of debris and for the forcing of the debris along the pipeline or passageway (10) to an outlet ahead of the breaking operation.

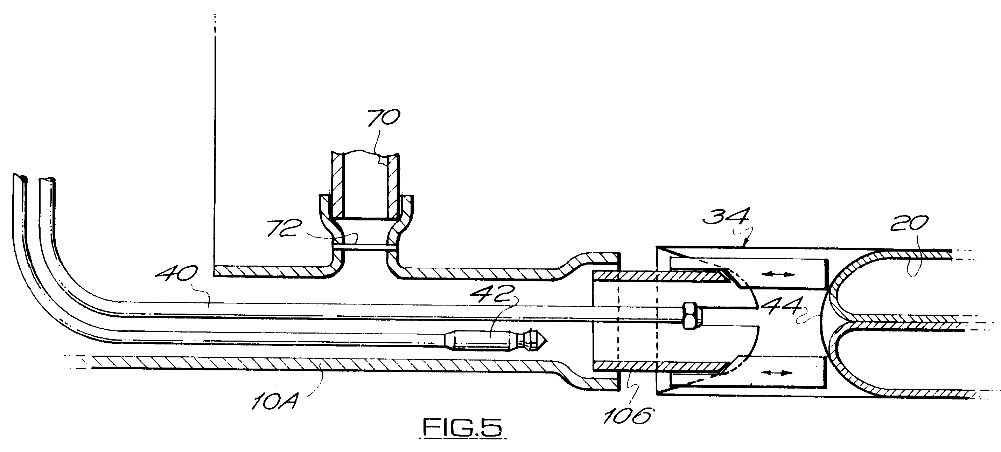

Fig 5 shows the arrangement of Fig 4 in sectional elevation, and the following everting flexible tube (20) is shown. The area of the head (34) may be shaped as indicated at (44) so that the tube (20) will smoothly evert.

It is to be noted that the front of the excavating head (34) is cup shaped so tha the ends of the pipe sections (10A) (10B) will effectively enter the recess and be engaged by and destroyed by the hammers (36). The hammer ends are scalloped as shown in order to provide the bursting effect, and to push the portions of the broken pipe towards the pipeline or passageway access.

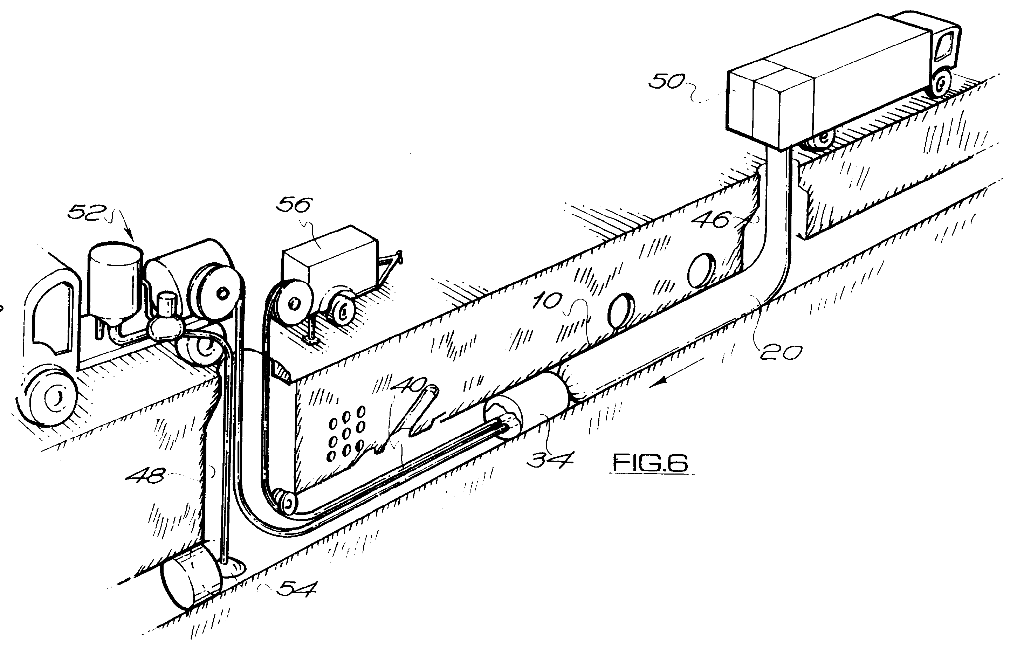

Fig 6 shows the operation as it proceeds between two manholes (46) and (48). A vehicle (50) provides the means to enable the lining (20) to be everted along the pipeline or passageway (10) after expansion of same by the head (34), and the vehicle (52) provides for the winching of the head (34) along the pipeline or passageway (10), for the supply of suction through the suction head (54) to remove the jetted debris, and a compressor (56) provides for the supply of compressed air through the pipe (40).

It is to be noted that in each case the bursting or cutting head is such as to enable the enlargement of the diameter of the pipeline or passageway (10) to an extent greater than the diameter of the pipe joint (12), expecially where the pipe is excavated as in the cases of Figs 2 to 6.

Furthermore, instead of using a water jet for the cleaning of the debris in such embodiments, it is possible to use bentonite which is a viscous liquid of high specific gravity which will cause the debris to float thereon and be ejected from the manhole. The pipeline can in effect be flooded with bentonite.

The embodiments described provide improved methods for the effective enlargement of an underground sewer pipe by a lining method in combination with breaking or cutting the original pipe. It is to be noted from Fig 5 that the lateral connection (70) preferably is cut as indicated at (72) prior to the pipe removal operation described. This can be performed with a cutting machine provided with a robot arm to enable the cut (72) to be effected from inside the pipeline or passageway.

## Claims

1. A method of increasing the diameter of an underground sewer pipe to render it more suitable to accommodate flood conditions comprising the steps of:
(a) driving an expander through the underground pipe, to create a passageway of increased diameter by breaking or excavating the existing underground pipe;
(b) everting a flexible absorbent tube, which is impregnated with curable synthetic resin, into position in the passageway immediately behind the expander by fluid pressure; and
(c) curing the resin of the tube to form a new pipe of increased diameter compared to the original pipe.

2. The method according to claim 1, wherein a lateral pipe meets the sewer pipe and prior to a removal operation of the original sewer pipe, the lateral pipe is cut where it meets the sewer pipe.

3. The method according to claim 3, wherein the lateral pipe is cut by a robot from inside the sewer pipe.

## Patentansprüche

1. Verfahren zum Vergrößern des Durchmessers einer unterirdischen Abwasserleitung, um sie zum Aufnehmen von Überflutungen besser geeignet zu machen, umfassend folgende Schritte:
(a) Fahren einer Spreizvorrichtung durch die unterirdisch verlegte, von Erdreich umgebene Rohrleitungund Aushöhlen der unterirdischen Rohrleitung, um einen Kanal von größerem Durchmesser zu schaffen.
(b) Umstülpendes Einführen eines flexiblen, absorbierenden Schlauches, der mit einem aushärtbaren synthetischen Harz imprägniert ist, in den Kanal unmittelbar hinter der Spreizvorrichtung (Expander) mittels Fluiddrucks und Aufblasen des Schlauches mit Fluiddruck, um ein neues Rohr mit vergrößertem Durchmesser zu schaffen; und
(c) Aushärten des Harzes des Schlauches, um eine neue Rohrleitung größeren Durchmessers verglichen mit der Originalrohrleitung zu bilden.

2. Verfahren nach Anspruch 1, bei dem weiter eine laterale (Quer-)Rohrleitung auf die Abwasserleitung trifft und vor dem Ausräumen der Originalabwasserleitung die laterale Rohrleitung dort aufgeschnitten wird, wo sie auf die Abwasserleitung trifft.

3. Verfahren nach Anspruch 3, bei dem die Quer-Rohrleitung mittels eines Roboters von der Innenseite der Abwasserrohrleitung her ausgeschnitten wird.

## Revendications

1. Méthode d'augmentation du diamètre d'un tuyau d'égout souterrain afin de le rendre plus approprié pour s'accommoder des conditions de crue comprenant les phases de:
(a) mettre un agrandisseur dans le tuyau souterrain pour créer un passage de plus grand diamètre en cassant ou en creusant le tuyau souterrain existant;
(b) retourner un tube absorbant souple, qui est imprégné de résine synthétique durcissable, en position dans le passage immédiatement derrière l'agrandisseur au moyen de la pression d'un fluide; et
(c) durcir la résine du tube pour former un nouveau tuyau de plus grand diamètre que le tuyau original.

2. Méthode suivant la revendication 1, dans laquelle un tuyau latéral rencontre le tuyau d'égout et, avant l'opération d'enlèvement du tuyau original, le tuyau latéral est coupé là où il rencontre le tuyau d'égout.

3. Méthode suivant la revendication 2, dans laquelle le tuyau latéral est coupé par un robot de l'intérieur du tuyau d'égout.
